# FASCICULE DE BREVET EUROPEEN

(11) **EP 0 700 710 B1**
(45) Date de publication et mention de la délivrance du brevet: **17.10.2001**
(21) Numéro de dépôt: 95401915.4
(22) Date de dépôt: 18.08.1995
(51) Int. Cl.: B01D 53/22, C01B 3/50

(54) **Procédé de séparation de l'hydrogène par voie membranaire à l'aide d'une cascade de membranes de selectivités croissantes**
Verfahren zur Reinigung von Wasserstoff mittels einer Kaskade von Membranen mit steigenden Selektivitäten
Process for the purification of hydrogen using a cascade of membranes with increasing selectivities

(30) Priorité: 12.09.1994 FR 9410851
(43) Date de publication de la demande: 13.03.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Fuentes, François, Houston, Texas 77077 (US); Dolle, Pierre-Olivier, F-92300 Levallois-Perret (FR)
(74) Mandataire: Le Moenner, Gabriel

(56) Documents cités:
- EP-A- 0 521 784
- EP-A- 0 586 018
- FR-A- 2 265 673
- US-A- 5 252 219
- US-A- 5 306 331

## Description

L'invention concerne la production ou séparation de gaz par membranes. L'invention s'applique plus particulièrement aux cas de la séparation d'hydrogène d'un milieu gazeux riche en hydrocarbures lourds pouvant par exemple provenir d'une raffinerie.

La production de gaz (notamment l'azote ou encore l'hydrogène) par des membranes s'est considérablement développée ces dernières années, partout dans le monde, en complément de la production traditionnelle par voie cryogenique, car elle présente les avantages suivants :
- Une excellente sécurité d'approvisionnement;
- De faibles coûts de production;
- La possibilité de fournir, à des coûts très attractifs, selon les applications considérées, des gaz de pureté adaptée.

Le principe est que, sous l'effet d'une différence de pression partielle de part et d'autre de la membrane, on obtient, côté perméat, un mélange à basse pression, enrichi en composants les plus perméables et en sortie de membrane (aussi appelée côté "résidu" ou coté "rejet"), un mélange à une pression proche de la pression d'alimentation (du mélange entrant) et qui est enrichi en composants les moins perméables.

On utilise ainsi pour produire de l'azote (souvent qualifié de "impur") à partir d'air, des membranes semi-perméables présentant de bonnes propriétés de séparation de l'oxygène par rapport à l'azote (sélectivité), par exemple du type polyimide, le mélange enrichi en oxygène étant obtenu côté perméat. Ces membranes sont souvent qualifiées de membranes "azote".

Pour ce qui est de la production d'hydrogène ou de CO, on procède le plus souvent à une récupération à partir de mélanges issus de certaines industries, que l'on sépare sur des membranes semi-perméables présentant de bonnes propriétés de séparation de l'hydrogène par rapport aux autres composants du mélange (on utilise par exemple des membranes du type polyaramide), le mélange enrichi en hydrogène étant obtenu côté perméat, le mélange enrichi selon les cas en hydrocarbures ou en CO étant obtenu du coté résiduaire de la membrane. Ces membranes sont souvent qualifiées de membranes "hydrogène".

Il apparaît que les performances obtenues dépendront très largement des conditions d'utilisation de la membrane, telles que la température, la pression d'alimentation de la membrane, ou encore la teneur du mélange entrant en le composant que l'on souhaite extraire côté perméat.

On sait ainsi pour ce qui est de la température, qu'en augmentant la température de fonctionnement de la membrane, le plus souvent, la perméabilité et donc la productivité de la membrane augmentent, mais sa sélectivité (par exemple O₂/N₂) et donc le rendement se dégradent. On entend le plus souvent par l'expression "température de fonctionnement de la membrane ou du module membranaire" la température obtenue à l'intérieur de la membrane ou du module du fait de la température du gaz entrant qui y transite, avec parfois l'intervention supplémentaire d'un système extérieur de chauffe du module membranaire ou de maintien en température (enceinte thermostatée).

Ainsi, selon les cas, pour obtenir le niveau de performances requises, on chauffera le gaz entrant à plusieurs dizaines de degré, ou on maintiendra ce gaz à la température ambiante, ou encore dans certains cas on refroidira ce gaz en dessous de la température ambiante, voire en dessous de 0°C.

On rappellera ici, pour le cas de la production d'azote à partir d'air que le "rendement" de la membrane représente la proportion d'azote présente dans le mélange entrant que l'on retrouve à la sortie (résiduaire) de la membrane, la sélectivité O₂/N₂ de la membrane représente quant à elle le rapport des perméances (on utilise aussi souvent le terme perméabilités) de l'oxygène et de l'azote au travers de la membrane (sel. = Perm (O₂) / Perm (N₂)). Le même type de raisonnement s'applique pour des membranes "hydrogène", sachant qu'ici, le raisonnement doit être inversé en terme de rendement d'extraction puisque c'est le mélange perméat enrichi en hydrogène que l'on cherche à récupérer .

Dans le cas de la production d'hydrogène à partir de certains mélanges entrants issus de raffinerie, dont la concentration en hydrocarbures lourds est élevée, on observe, selon la pureté en hydrogène recherchée à l'arrivée, l'extraction coté perméat d'une part importante de l'hydrogène du mélange, voire d'une partie des hydrocarbures légers, entraînant un enrichissement du gaz résiduaire de la membrane en constituants "lourds". Ce phénomène conduit à une élévation du point de rosée du gaz résiduaire par rapport au point de rosée du mélange entrant et peut donc entraîner, selon la température de fonctionnement de la membrane, une condensation d'hydrocarbures, extrêmement néfaste pour les fibres polymères qui constituent la membrane.

L'attitude qu'il est possible d'adopter face à ce problème de condensation intempestive d'hydrocarbures dans la membrane, est de limiter volontairement le rendement d'extraction en hydrogène, par exemple en utilisant des membranes "hydrogène" à une température différente de celle où elles montrent le meilleur rendement, ce qui représente incontestablement une "cote mal taillée" pénalisante.

Dans ce contexte, un objectif de la présente invention est de proposer un procédé amélioré de séparation membranaire de l'hydrogène, d'un milieu gazeux entrant composé majoritairement d'hydrogène et d'hydrocarbures de formule CₓH_{y}, permettant, selon les besoins exprimés par l'utilisateur, d'effectuer cette séparation dans de bonnes conditions de rendement, avec des risques réduits de condensation intempestive, qui serait néfaste pour la membrane.

La Demanderesse a mis en évidence le fait qu'il est possible de proposer une solution au problème posé plus haut, par la mise en oeuvre d'au moins deux séparateurs membranaires successifs, de sélectivité différente en hydrogène (vis à vis du mélange traité dans chaque séparateur), la sélectivité en hydrogène du second étage de séparation (second étage qui fonctionne à une seconde température de fonctionnement), étant supérieure à celle du premier étage de séparation (premier étage qui fonctionne à une première température de fonctionnement).

Cette solution "mixte" :
- maximise le rendement d'extraction en hydrogène,
- tout en minimisant les coûts d'investissement et de fonctionnement,
- assure par un choix adéquat de chaque étage, l'élimination de tout risque de condensation : le premier étage peu sélectif mais très productif évite un trop grand appauvrissement du premier résiduaire en éléments légers, le second étage très sélectif ne traite qu'une fraction du mélange entrant.

On note aussi que cette disposition mixte met en oeuvre, de façon paradoxale, les fibres les moins sélectives à l'endroit où la force motrice est maximale (c'est à dire à l'entrée).

On utilisera dans tout ce qui suit la terminologie simplifiée "sélectivité" d'un séparateur membranaire en un gaz donné, qui devra s'entendre comme signifiant la sélectivité de ce séparateur en le gaz considéré vis à vis du mélange traité dans ce séparateur (la sélectivité étant, comme déjà signalé plus haut une notion relative).

On pourra obtenir la différence de sélectivité évoquée ci-dessus par exemple par l'utilisation de membranes de qualités différentes, ou encore par l'utilisation de membranes de même type mais mises en oeuvre dans des conditions opératoires différentes, notamment de température. On pourra par exemple obtenir une telle différence en utilisant en premier étage une fibre du type polyimide et en second étage une fibre du type polyaramide.

On opérera avantageusement dans des conditions où la température de fonctionnement du premier étage de séparation est inférieure à celle du second étage de séparation.

Ainsi, le procédé selon l'invention, de séparation membranaire de l'hydrogène d'un mélange gazeux entrant composé majoritairement d'hydrogène et d'hydrocarbures, tel que celui provenant d'une raffinerie, selon lequel on procède à une séparation membranaire sur au moins deux séparateurs membranaires successifs de la façon suivante : on fait passer le mélange entrant dans un premier séparateur membranaire fonctionnant à une première température de fonctionnement et l'on fait passer tout ou partie du mélange résiduaire issu de ce premier séparateur membranaire dans un second séparateur membranaire fonctionnant à une seconde température de fonctionnement, un mélange enrichi en hydrogène étant obtenu à la sortie perméat de chacun des deux séparateurs, la sélectivité en hydrogène du premier séparateur membranaire étant inférieure à la sélectivité en hydrogène du second séparateur membranaire, la température de rosée du mélange gazeux obtenu côté résiduaire du premier séparateur étant inférieure à ladite première température de fonctionnement et la température de rosée du mélange gazeux obtenu côté résiduaire du second séparateur étant inférieure à ladite seconde température de fonctionnement.

Le document EP-A-0521784 décrit un système de production d'azote à séparateurs membranaires en cascade opérant à des températures différentes pour contrôler le débit et/ou la pureté de l'azote produit.

Par "séparateur membranaire", on entend selon l'invention, une membrane ou module membranaire semi-perméable, le cas échéant un ensemble de plusieurs membranes (ou modules membranaires) semi-perméables montés en parallèle, présentant des propriétés de séparation de l'hydrogène par rapport au mélange entrant dans le séparateur.

On entend par "température de fonctionnement" selon l'invention, la notion rappelée plus haut dans la présente demande.

Comme précédemment décrit, le procédé selon l'invention prévoit dans certains cas d'effectuer un refroidissement -qui peut être sensible- du mélange résiduaire issu du premier étage de séparation, avant son arrivée sur le second étage de séparation.

Une telle opération de refroidissement pourra alors par exemple être effectuée par des moyens tels que froid mécanique, échangeur sur liquide cryogénique, ou encore opération de détente sur une turbine.

Les tableaux I et II illustrent les résultats obtenus dans le cadre de deux exemples (exemples 1 et 2) de mise en oeuvre de l'invention, avec un objectif de pureté et de rendement élevé, à partir d'un mélange du type raffinerie, contenant une concentration élevée d'hydrocarbures lourds. Ces deux exemples de mise en oeuvre ont été effectués sur un double étage de séparation, dans les conditions suivantes :

### Exemple 1 :

- en premier étage, des modules de type polyimide fonctionnant à une température de 70°C, et en second étage, des modules de type polyaramide fonctionnant à une température de 90°C,
- la partie haute du tableau compare les résultats obtenus par la solution mixte selon l'invention avec les résultats obtenus selon des solutions monoétage purement polyimide (base 100 de l'investissement) ou purement polyaramide (investissement 386 par rapport à la base 100 précédente), la solution mixte selon l'invention représentant alors un investissement de 370.
- la première colonne de la partie basse du tableau donne les caractéristiques du mélange entrant (composition, débit, température, température de rosée, et pression), les colonnes suivantes fournissant les mêmes informations pour les différents mélanges obtenus;

Les résultats obtenus dans le cadre de l'exemple 1 montrent pour la réunion des deux perméats un taux de récupération de l'ordre de 94%, une pureté en hydrogène de près de 96%.

On obtient le même rendement d'extraction que celui obtenu avec une unité composée de membranes très sélectives (polyaramide), tout en minimisant l'investissement et la puissance de chaufffage nécessaire puisque seule une fraction du gaz à traiter est portée à la température optimale la plus élevée.

D'autre part, cette séparation réalisée sur un double étage mixte permet d'éviter tout risque de recondensation des hydrocarbures lourds dans les modules membranaires puisqu'à chaque étage, la température de rosée du mélange résiduaire est inférieure à la température de fonctionnement de l'étage.

### exemple 2 :

- en premier étage, des modules de type polyimide fonctionnant à une température de 70°C, en second étage, des modules de type polyaramide fonctionnant cette fois à la même température de 70°C,
- la partie haute du tableau compare les résultats obtenus selon l'invention avec des solutions monoétage purement polyimide (base 100 de l'investissement, qui doit être considérée comme différente de la base 100 de l'exemple 1) ou purement polyaramide (investissement 259 par rapport à la base 100 purement polyimide de cet exemple 2), la solution mixte selon l'invention représentant alors un investissement de 249.
- la première colonne du tableau donne ici encore les caractéristiques du mélange entrant (composition, débit, température, température de rosée, et pression), les colonnes suivantes fournissant les mêmes informations pour les différents mélanges obtenus;

Les résultats obtenus dans le cadre de cet exemple 2 montrent pour la réunion des deux perméats un taux de récupération de l'ordre de 88%, une pureté en hydrogène de plus de 98%. Ici encore, cette séparation réalisée sur un double étage mixte permet d'éviter tout risque de recondensation des hydrocarbures lourds dans les modules membranaires puisqu'à chaque étage, la température de rosée du mélange résiduaire est inférieure à la température de fonctionnement de l'étage.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art dans le cadre des revendications ci-après.

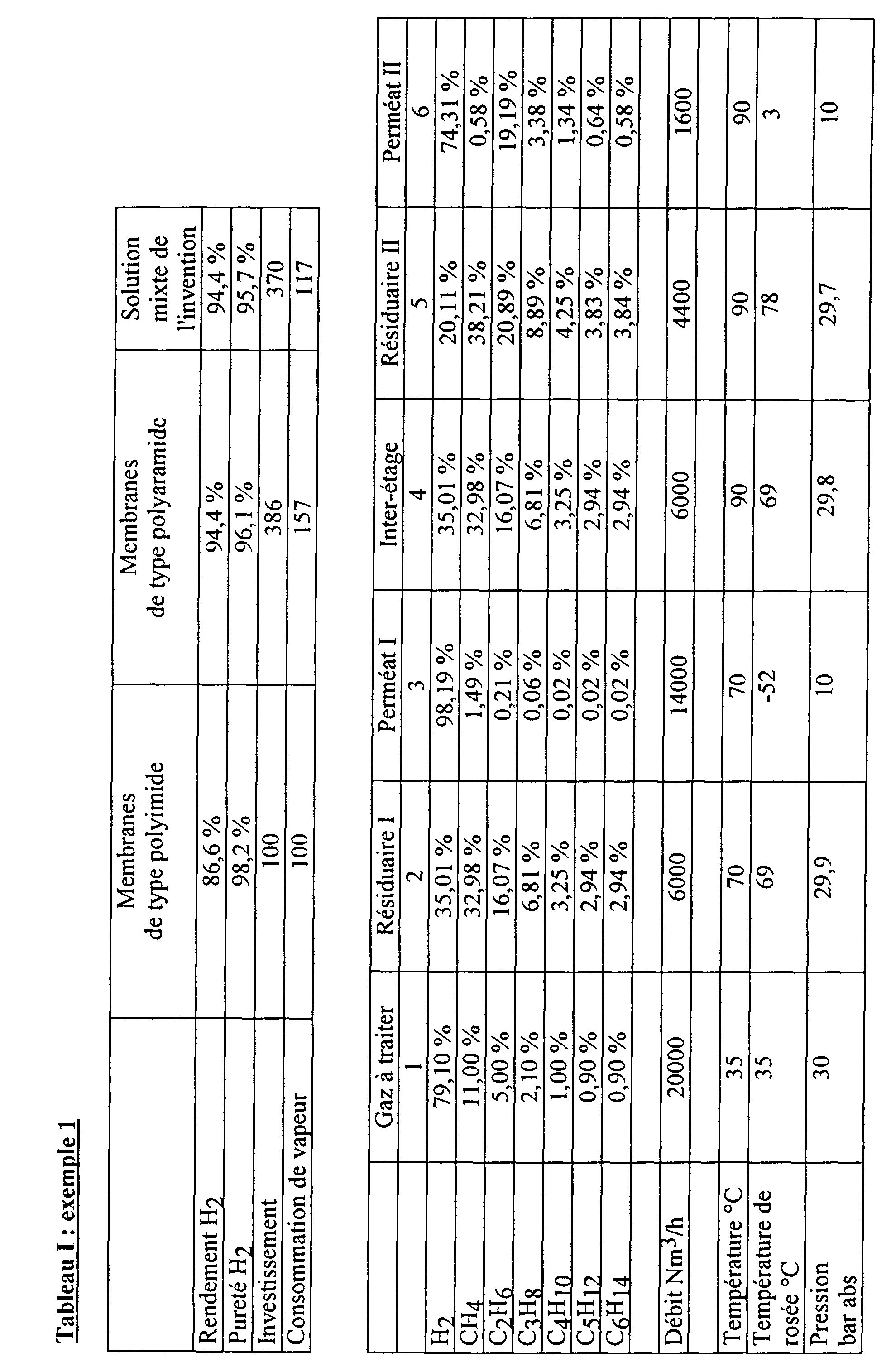

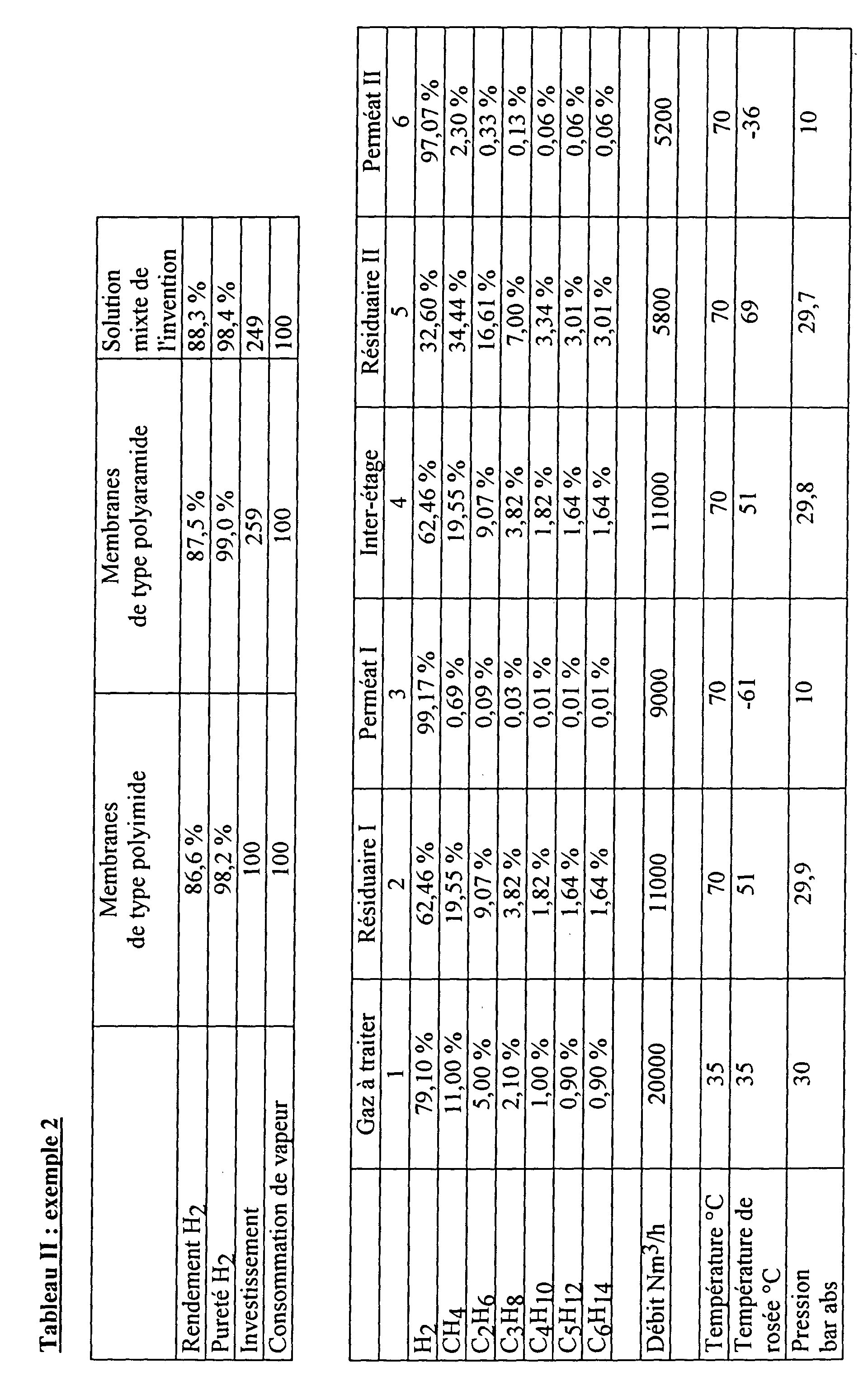

## Revendications

1. Procédé de séparation membranaire de l'hydrogène d'un mélange gazeux entrant composé majoritairement d'hydrogène et d'hydrocarbures, selon lequel on procède à une séparation membranaire sur au moins deux séparateurs membranaires successifs de la façon suivante : on fait passer le mélange entrant dans un premier séparateur membranaire fonctionnant à une première température de fonctionnement et l'on fait passer tout ou partie du mélange résiduaire issu de ce premier séparateur membranaire dans un second séparateur membranaire fonctionnant à une seconde température de fonctionnement, un mélange enrichi en hydrogène étant obtenu à la sortie perméat de chacun des deux séparateurs, la sélectivité en hydrogène du premier séparateur membranaire étant inférieure à la sélectivité en hydrogène du second séparateur membranaire, la température de rosée du mélange gazeux obtenu côté résiduaire du premier séparateur étant inférieure à ladite première température de fonctionnement et la température de rosée du mélange gazeux obtenu côté résiduaire du second séparateur étant inférieure à ladite seconde température de fonctionnement.

2. Procédé selon la revendication 1, **caractérisé en ce que** l'on met en oeuvre pour le premier et le second séparateur des membranes de type différent.

3. Procédé selon la revendication 1, **caractérisé en ce que** l'on met en oeuvre pour le premier et le second séparateur des membranes de même type, et **en ce que** ladite première température de fonctionnement est différente de ladite seconde température de fonctionnement.

4. Procédé selon la revendication 3, **caractérisé en ce que** ladite première température de fonctionnement est inférieure à ladite seconde température de fonctionnement.

5. Procédé selon la revendication 1 ou la revendication 2, **caractérisé en ce que** le premier séparateur membranaire est du type polyimide et le second séparateur membranaire est du type polyaramide.

## Claims

1. Process for the membrane separation of hydrogen from an incoming gas mixture composed predominantly of hydrogen and of hydrocarbons, according to which a membrane separation is carried out on at least two successive membrane separators in the following way: the incoming mixture is passed into a first membrane separator operating at a first operating temperature and all or part of the residual mixture resulting from this first membrane separator is passed into a second membrane separator operating at a second operating temperature, a mixture enriched in hydrogen being obtained at the permeate outlet of each of the two separators, the selectivity for hydrogen of the first membrane separator being lower than the selectivity for hydrogen of the second membrane separator, the dew point of the gas mixture obtained on the residual side of the first separator being lower than the said first operating temperature and the dew point of the gas mixture obtained on the residual side of the second separator being lower than the said second operating temperature.

2. Process according to Claim 1, **characterized in that** membranes of different types are employed for the first and the second separators.

3. Process according to Claim 1, **characterized in that** membranes of the same type are employed for the first and the second separators and **in that** the said first operating temperature is different from the said second operating temperature.

4. Process according to Claim 3, **characterized in that** the said first operating temperature is lower than the said second operating temperature.

5. Process according to Claim 1 or Claim 2, **characterized in that** the first membrane separator is of the polyimide type and the second membrane separator is of the polyaramide type.

## Patentansprüche

1. Verfahren zur Membranabtrennung von Wasserstoff aus einem eintretenden Gasgemisch, das hauptsächlich aus Wasserstoff und Kohlenwasserstoffen besteht, bei dem man auf mindestens zwei hintereinander angeordneten Membranseparatoren eine Membrantrennung vornimmt, indem man: das eintretende Gemisch durch einen ersten, bei einer ersten Betriebstemperatur betriebenen Membranseparator hindurchleitet und das aus diesem ersten Membranseparator austretende Restgemisch ganz oder teilweise durch einen zweiten, bei einer zweiten Betriebstemperatur betriebenen Membranseparator hindurchleitet, wobei man am Permeatausgang jedes der beiden Separatoren ein mit Wasserstoff angereichertes Gemisch erhält, wobei die Wasserstoffselektivität des ersten Membranseparators kleiner als die Wasserstoffselektivität des zweiten Membranseparators ist, der Taupunkt des auf der Restseite des ersten Separators erhaltenen Gasgemischs niedriger als die erste Betriebstemperatur und der Taupunkt des auf der Restseite des zweiten Separators erhaltenen Gasgemischs niedriger als die zweite Betriebstemperatur ist.

2. Verfahren nach Anspruch 1, **dadurch gekennzeichnet, daß** man für den ersten und zweiten Separator Membranen unterschiedlichen Typs einsetzt.

3. Verfahren nach Anspruch 1, **dadurch gekennzeichnet, daß** man für den ersten und zweiten Separator Membranen gleichen Typs einsetzt und die erste Betriebstemperatur von der zweiten Betriebstemperatur verschieden ist.

4. Verfahren nach Anspruch 3, **dadurch gekennzeichnet, daß** die erste Betriebstemperatur niedriger als die zweite Betriebstemperatur ist.

5. Verfahren nach Anspruch 1 oder 2, **dadurch gekennzeichnet, daß** man einen ersten Membranseparator vom Polyimid-Typ und einen zweiten Membranseparator vom Polyaramid-Typ einsetzt.
